# EUROPEAN PATENT APPLICATION

(11) **EP 3 805 066 A1**
(43) Date of publication of application: **14.04.2021**
(21) Application number: 20200491.7
(22) Date of filing: 07.10.2020
(51) Int. Cl.: B60W 60/00, B62D 15/02, B62D 1/28, B60W 50/00

(54) **SAFE TRANSITION FROM AUTONOMOUS-TO-MANUAL DRIVING MODE WITH ASSISTANCE OF AUTONOMOUS DRIVING SYSTEM**

(30) Priority: 09.10.2019 US 201916597710
(71) Applicant: Baidu USA LLC, Sunnyvale, California 94089 (US)
(72) Inventor: Liu, Xiaodong, Sunnyvale, California 94089 (US); Qu, Ning, Sunnyvale, California 94089 (US)
(74) Representative: Maiwald Patent- und Rechtsanwaltsgesellschaft mbH

(57) **Abstract**

A method of transitioning from autonomous driving (AD) to manual driving (MD) mode for an autonomous driving vehicle (ADV) are disclosed. The method includes determining whether AD-to-MD transition is allowed in a current location of the ADV; determining whether a current driving scenario is safe for the AD-to-MD transition; in response to determining that the AD-to-MD transition is allowed in the current location and the current driving scenario is safe for the AD-to-MD transition, enabling the AD-to-MD transition; determining whether there is a request for the AD-to-MD transition; in response to determining there is the request, computing a current vehicle motion trajectory of the ADV; comparing the current vehicle motion trajectory with a motion trajectory derived from inputs of a driver of the ADV; determining whether to confirm the AD-to-MD transition based on the comparison.

## Description

### TECHNICAL FIELD

Embodiments of the present disclosure relate generally to operating autonomous vehicles. More particularly, embodiments of the disclosure relate to safe transition from autonomous driving (AD) mode to manual driving (MD) mode with assistance of an autonomous driving system.

### BACKGROUND

Vehicles operating in an autonomous mode (e.g., driverless) can relieve occupants, especially the driver, from some driving-related responsibilities. When operating in an autonomous mode, the vehicle can navigate to various locations using onboard sensors, thereby allowing the vehicle to travel with minimal human interaction or in some cases without any passengers.

Generally, there are two approaches for deployment of an autonomous driving vehicle. One approach is to deploy the vehicle without certain control components (e.g., steering wheel, acceleration pedal, brake pedal, etc.). Another approach is to deploy the vehicle with such control components, thereby allowing a driver an opportunity to take over the control of the vehicle. With respect to the former, since the driver is not involved, AD-to-MD or MD-to-AD transition is not a factor. However, with respect to the latter, AD-to-MD or MD-to-AD transition needs to be carefully considered simply due to unsafe control actions during the transition, which may place the vehicle in a hazardous situation. For example, during the transition, AD and MD (by a human driver) may compete for control, thereby resulting in a rough and potentially hazardous transition. Another example is AD and MD may assume the counterpart is in control, and thus, neither AD nor MD ends up controlling the vehicle.

Since production autonomous driving vehicle has yet to exist, other than modified prototype autonomous vehicles with a safety driver on-board for testing purposes, very little work has been performed or reported (if at all) to address AD-to-MD or MD-to-AD transition.

### SUMMARY

Embodiments of the present disclosure provide a computer-implemented method of transitioning from autonomous driving (AD) to manual driving (MD) mode for an autonomous driving vehicle, a non-transitory machine-readable medium and a data processing system. The invention is set out by the appended claims.

The computer-implemented method of transitioning from autonomous driving (AD) to manual driving (MD) mode for an autonomous driving vehicle includes: determining whether AD-to-MD transition is allowed in a current location of the ADV; determining whether a current driving scenario is safe for the AD-to-MD transition; in response to determining that the AD-to-MD transition is allowed in the current location and the current driving scenario is safe for the AD-to-MD transition, enabling the AD-to-MD transition; determining whether there is a request for the AD-to-MD transition; determining whether there is a request for the AD-to-MD transition; comparing the current vehicle motion trajectory with a motion trajectory derived from inputs of a driver of the ADV; and determining whether to confirm the AD-to-MD transition based on the comparison.

The non-transitory machine-readable medium has instructions stored therein. When the instructions are executed by a processor, cause the processor to perform the computer-implemented method of transitioning from autonomous driving (AD) to manual driving (MD) mode for an autonomous driving vehicle.

The data processing system includes a processor and a memory. The memory is coupled to the processor and stores instructions. When the instructions are executed by a processor, cause the processor to perform the computer-implemented method of transitioning from autonomous driving (AD) to manual driving (MD) mode for an autonomous driving vehicle.

### BRIEF DESCRIPTION OF THE DRAWINGS

Embodiments of the disclosure are illustrated by way of example and not limitation in the figures of the accompanying drawings in which like references indicate similar elements.
Figure 1 is a block diagram illustrating a networked system according to one embodiment.
Figure 2 is a block diagram illustrating an example of an autonomous vehicle according to one embodiment.
Figures 3A-3B are block diagrams illustrating an example of a perception and planning system used with an autonomous driving vehicle (ADV) according to one embodiment.
Figures 4A-4B are diagrams illustrating a drive by wire system according to one embodiment.
Figure 5 is a flow diagram illustrating an example method for enabling autonomous driving (AD) to manual driving (MD) transition according to one embodiment.
Figure 6 is a flow diagram illustrating an example method for confirming AD-to-MD transition according to one embodiment.
Figure 7 is a flow diagram illustrating an example method for monitoring AD-to-MD transition according to one embodiment.
Figure 8 is a flow diagram illustrating an example method for a driver initiated transition from AD mode to MD mode according to one embodiment.
Figure 9 is a flow diagram illustrating an example method for a system initiated transition from AD mode to MD mode according to one embodiment.
Figure 10 is a flow diagram illustrating another example method for a system initiated transition from AD mode to MD mode according to one embodiment.
Figure 11 is a block diagram illustrating a data processing system according to one embodiment.

### DETAILED DESCRIPTION

Various embodiments and aspects of the disclosures will be described with reference to details discussed below, and the accompanying drawings will illustrate the various embodiments. The following description and drawings are illustrative of the disclosure and are not to be construed as limiting the disclosure. Numerous specific details are described to provide a thorough understanding of various embodiments of the present disclosure. However, in certain instances, well-known or conventional details are not described in order to provide a concise discussion of embodiments of the present disclosures.

Reference in the specification to "one embodiment" or "an embodiment" means that a particular feature, structure, or characteristic described in conjunction with the embodiment can be included in at least one embodiment of the disclosure. The appearances of the phrase "in one embodiment" in various places in the specification do not necessarily all refer to the same embodiment.

Some embodiments relate to a method, apparatus, and system for AD-to-MD transition that target autonomous drive by wire (e.g., steer-by-wire, brake-by-wire, throttle-by-wire, shift-by-wire, etc.) vehicles, where a driver has no direct control over a vehicle's longitudinal motion and lateral motion via control components, such as acceleration pedal, brake pedal, and steering wheel. Drive by wire (also referred to as x-by-wire) refers to the use of electrical or electro-mechanical systems for performing vehicle functions that are traditionally achieved by mechanical components (or linkages). This technology replaces the traditional mechanical control systems with electronic control systems using electromechanical actuators and human-machine interfaces, such as pedal and steering feel emulators.

Embodiments of the disclosure focus on improving the safety of AD-to-MD transition using information (e.g., traffic information, road information, responses of the vehicle, longitudinal/lateral motion intention from a driver's take over request, etc.) provided by the vehicle's autonomous driving system (e.g., sensor system, control system, perception and planning system, etc.). Since the driver's direct take over control is not considered for autonomous drive by wire vehicle, the driver's intention, as commands, is translated into longitudinal and lateral commands to control the vehicle.

According to some embodiments, methods and systems for transitioning from autonomous driving (AD) to manual driving (MD) mode for an autonomous driving vehicle (ADV) are described. In one embodiment, whether AD-to-MD transition is allowed in a current location of the ADV is determined. Whether a current driving scenario is safe for the AD-to-MD transition is determined. In response to a determination that the AD-to-MD transition is allowed in the current location and the current driving scenario is safe for the AD-to-MD transition, the AD-to-MD transition is enabled. Whether there is a request for the AD-to-MD transition is determined. In response to a determination there is the request, a current vehicle motion trajectory of the ADV is computed. The current vehicle motion trajectory is compared with a motion trajectory derived from inputs of a driver of the ADV. Whether to confirm the AD-to-MD transition is determined based on the comparison.

In one embodiment, whether the AD-to-MD transition is successfully completed within a predefined timeframe is determined. In response to a determination that the AD-to-MD transition is successfully completed within the predefined timeframe, the ADV is transitioned from AD to MD mode.

In one embodiment, prior to the determination whether the AD-to-MD transition is allowed in the current location of the ADV, road sections along a planned route determined to be unsafe are identified based on map and point of interest (MPOI) information. Whether the current location of the ADV is on an unsafe road section is determined.

In one embodiment, the determination whether the AD-to-MD transition is allowed in the current location of the ADV includes a determination that the AD-to-MD transition is not allowed in response to determining that the current location of the ADV is on the unsafe road section.

In one embodiment, whether the current driving scenario is safe for the AD-to-MD transition is determined based on real-time traffic information and real-time local environment data detected by the ADV.

In one embodiment, prior to the determination whether the AD-to-MD transition is successfully completed within the predefined timeframe, a transition timer is started. In response to the determination that the AD-to-MD transition is not successfully completed within the predefined timeframe, whether the transition timer has expired is determined.

In one embodiment, a driver of the ADV is allowed to control the ADV in response to a detection that the ADV is approaching an operational design domain (ODD) boundary or facing an unexpected scenario.

In one embodiment, whether the control of the ADV by the driver is confirmed before a timeout occurs is determined. In response to the determination that the control of the ADV is not confirmed before the timeout occurs, the ADV is commanded to proceed to a safe state.

In one embodiment, whether the ADV is operating in fail operational mode is determined. In response to a determination that the ADV is operating in fail operational mode, whether a driver of the ADV is allowed to control the ADV is determined. In response to a determination that the driver is allowed to control the ADV, a driver take-over request is sent.

In one embodiment, a driver response timer is started, and whether the driver take-over request is confirmed before the driver timer expires is determined.

In one embodiment, subsequent to enabling the AD-to-MD transition, a message indicating the AD-to-MD transition is enabled is displayed. In response to a determination that the AD-to-MD transition is not allowed in the current location or the current driving scenario is not safe for the AD-to-MD transition, a message indicating the AD-to-MD transition is not enabled (or disabled) is displayed.

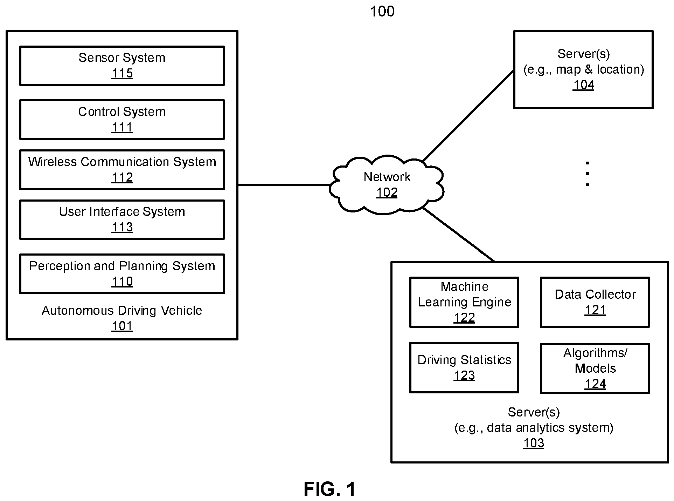

Figure 1 is a block diagram illustrating an autonomous vehicle network configuration according to one embodiment of the disclosure. Referring to Figure 1, network configuration 100 includes autonomous vehicle 101 that may be communicatively coupled to one or more servers 103-104 over a network 102. Although there is one autonomous vehicle shown, multiple autonomous vehicles can be coupled to each other and/or coupled to servers 103-104 over network 102. Network 102 may be any type of networks such as a local area network (LAN), a wide area network (WAN) such as the Internet, a cellular network, a satellite network, or a combination thereof, wired or wireless. Server(s) 103-104 may be any kind of servers or a cluster of servers, such as Web or cloud servers, application servers, backend servers, or a combination thereof. Servers 103-104 may be data analytics servers, content servers, traffic information servers, map and point of interest (MPOI) servers, or location servers, etc.

An autonomous vehicle refers to a vehicle that can be configured to in an autonomous mode in which the vehicle navigates through an environment with little or no input from a driver. Such an autonomous vehicle can include a sensor system having one or more sensors that are configured to detect information about the environment in which the vehicle operates. The vehicle and its associated controller(s) use the detected information to navigate through the environment. Autonomous vehicle 101 can operate in a manual mode, a full autonomous mode, or a partial autonomous mode. Hereinafter the terms "autonomous vehicle" and "autonomous driving vehicle" (ADV) may be used interchangeably.

In one embodiment, autonomous vehicle 101 includes, but is not limited to, perception and planning system 110, vehicle control system 111, wireless communication system 112, user interface system 113, infotainment system 114, and sensor system 115. Autonomous vehicle 101 may further include certain common components included in ordinary vehicles, such as, an engine, wheels, steering wheel, transmission, etc., which may be controlled by vehicle control system 111 and/or perception and planning system 110 using a variety of communication signals and/or commands, such as, for example, acceleration signals or commands, deceleration signals or commands, steering signals or commands, braking signals or commands, etc.

Components 110-115 may be communicatively coupled to each other via an interconnect, a bus, a network, or a combination thereof. For example, components 110-115 may be communicatively coupled to each other via a controller area network (CAN) bus. A CAN bus is a vehicle bus standard designed to allow microcontrollers and devices to communicate with each other in applications without a host computer. It is a message-based protocol, designed originally for multiplex electrical wiring within automobiles, but is also used in many other contexts.

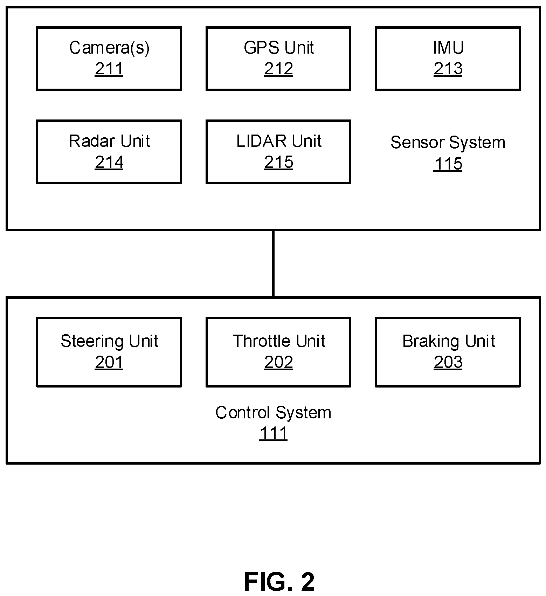

Referring now to Figure 2, in one embodiment, sensor system 115 includes, but it is not limited to, one or more cameras 211, global positioning system (GPS) unit 212, inertial measurement unit (IMU) 213, radar unit 214, and a light detection and range (LIDAR) unit 215. GPS system 212 may include a transceiver operable to provide information regarding the position of the autonomous vehicle. IMU unit 213 may sense position and orientation changes of the autonomous vehicle based on inertial acceleration. Radar unit 214 may represent a system that utilizes radio signals to sense objects within the local environment of the autonomous vehicle. In some embodiments, in addition to sensing objects, radar unit 214 may additionally sense the speed and/or heading of the objects. LIDAR unit 215 may sense objects in the environment in which the autonomous vehicle is located using lasers. LIDAR unit 215 could include one or more laser sources, a laser scanner, and one or more detectors, among other system components. Cameras 211 may include one or more devices to capture images of the environment surrounding the autonomous vehicle. Cameras 211 may be still cameras and/or video cameras. A camera may be mechanically movable, for example, by mounting the camera on a rotating and/or tilting a platform.

Sensor system 115 may further include other sensors, such as, a sonar sensor, an infrared sensor, a steering sensor, a throttle sensor, a braking sensor, and an audio sensor (e.g., microphone). An audio sensor may be configured to capture sound from the environment surrounding the autonomous vehicle. A steering sensor may be configured to sense the steering angle of a steering wheel, wheels of the vehicle, or a combination thereof. A throttle sensor and a braking sensor sense the throttle position and braking position of the vehicle, respectively. In some situations, a throttle sensor and a braking sensor may be integrated as an integrated throttle/braking sensor.

In one embodiment, vehicle control system 111 includes, but is not limited to, steering unit 201, throttle unit 202 (also referred to as an acceleration unit), and braking unit 203. Steering unit 201 is to adjust the direction or heading of the vehicle. Throttle unit 202 is to control the speed of the motor or engine that in turn control the speed and acceleration of the vehicle. Braking unit 203 is to decelerate the vehicle by providing friction to slow the wheels or tires of the vehicle. Note that the components as shown in Figure 2 may be implemented in hardware, software, or a combination thereof.

Referring back to Figure 1, wireless communication system 112 is to allow communication between autonomous vehicle 101 and external systems, such as devices, sensors, other vehicles, etc. For example, wireless communication system 112 can wirelessly communicate with one or more devices directly or via a communication network, such as servers 103-104 over network 102. Wireless communication system 112 can use any cellular communication network or a wireless local area network (WLAN), e.g., using WiFi to communicate with another component or system. Wireless communication system 112 could communicate directly with a device (e.g., a mobile device of a passenger, a display device, a speaker within vehicle 101), for example, using an infrared link, Bluetooth, etc. User interface system 113 may be part of peripheral devices implemented within vehicle 101 including, for example, a keyboard, a touch screen display device, a microphone, and a speaker, etc.

Some or all of the functions of autonomous vehicle 101 may be controlled or managed by perception and planning system 110, especially when operating in an autonomous driving mode. Perception and planning system 110 includes the necessary hardware (e.g., processor(s), memory, storage) and software (e.g., operating system, planning and routing programs) to receive information from sensor system 115, control system 111, wireless communication system 112, and/or user interface system 113, process the received information, plan a route or path from a starting point to a destination point, and then drive vehicle 101 based on the planning and control information. Alternatively, perception and planning system 110 may be integrated with vehicle control system 111.

For example, a user as a passenger may specify a starting location and a destination of a trip, for example, via a user interface. Perception and planning system 110 obtains the trip related data. For example, perception and planning system 110 may obtain location and route information from an MPOI server, which may be a part of servers 103-104. The location server provides location services and the MPOI server provides map services and the POIs of certain locations. Alternatively, such location and MPOI information may be cached locally in a persistent storage device of perception and planning system 110.

While autonomous vehicle 101 is moving along the route, perception and planning system 110 may also obtain real-time traffic information from a traffic information system or server (TIS). Note that servers 103-104 may be operated by a third party entity. Alternatively, the functionalities of servers 103-104 may be integrated with perception and planning system 110. Based on the real-time traffic information, MPOI information, and location information, as well as real-time local environment data detected or sensed by sensor system 115 (e.g., obstacles, objects, nearby vehicles), perception and planning system 110 can plan a path or a route, and drive vehicle 101, for example, via control system 111, according to the planned route to reach the specified destination safely and efficiently.

Server 103 may be a data analytics system to perform data analytics services for a variety of clients. In one embodiment, data analytics system 103 includes data collector 121 and machine learning engine 122. Data collector 121 collects driving statistics 123 from a variety of vehicles, either autonomous vehicles or regular vehicles driven by human drivers. Driving statistics 123 include information indicating the driving commands (e.g., throttle, brake, steering commands) issued and responses of the vehicles (e.g., speeds, accelerations, decelerations, directions) captured by sensors of the vehicles at different points in time. Driving statistics 123 may further include information describing the driving environments at different points in time, such as, for example, routes (including starting and destination locations), MPOIs, road conditions, weather conditions, etc.

Based on driving statistics 123, machine learning engine 122 generates or trains a set of rules, algorithms, and/or predictive models 124 for a variety of purposes. In one embodiment, algorithms 124 may include a path algorithm that receives inputs, constraints, and a cost function, and generates an path for the ADV, taking into account the comfort level associated with the path as well as the preference for the path to stay close to the lane center line and away from obstacles with a buffer. A cost function for the path planning may also be generated as a part of algorithms 124. Algorithms 124 can then be uploaded on ADVs to be utilized during autonomous driving in real-time.

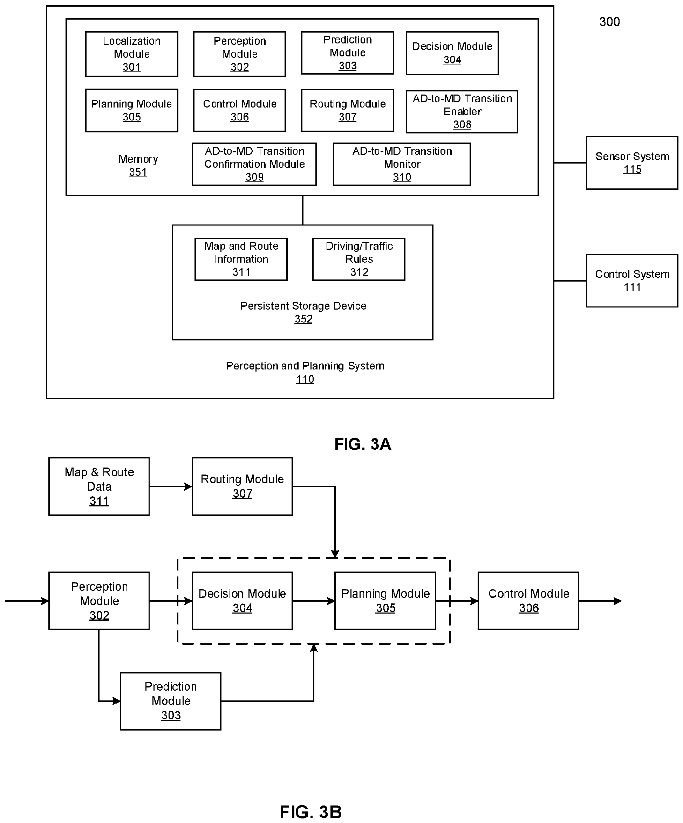

Figures 3A and 3B are block diagrams illustrating an example of a perception and planning system used with an autonomous vehicle according to one embodiment. System 300 may be implemented as a part of autonomous vehicle 101 of Figure 1 including, but is not limited to, perception and planning system 110, control system 111, and sensor system 115. Referring to Figures 3A-3B, perception and planning system 110 includes, but is not limited to, localization module 301, perception module 302, prediction module 303, decision module 304, planning module 305, control module 306, routing module 307, AD-to-MD transition enabler 308, AD-to-MD transition confirmation module 309, and AD-to-MD transition monitor 310.

Some or all of modules 301-310 may be implemented in software, hardware, or a combination thereof. For example, these modules may be installed in persistent storage device 352, loaded into memory 351, and executed by one or more processors (not shown). Note that some or all of these modules may be communicatively coupled to or integrated with some or all modules of vehicle control system 111 of Figure 2. Some of modules 301-310 may be integrated together as an integrated module.

Localization module 301 determines a current location of autonomous vehicle 300 (e.g., leveraging GPS unit 212) and manages any data related to a trip or route of a user. Localization module 301 (also referred to as a map and route module) manages any data related to a trip or route of a user. A user may log in and specify a starting location and a destination of a trip, for example, via a user interface. Localization module 301 communicates with other components of autonomous vehicle 300, such as map and route information 311, to obtain the trip related data. For example, localization module 301 may obtain location and route information from a location server and a map and POI (MPOI) server. A location server provides location services and an MPOI server provides map services and the POIs of certain locations, which may be cached as part of map and route information 311. While autonomous vehicle 300 is moving along the route, localization module 301 may also obtain real-time traffic information from a traffic information system or server.

Based on the sensor data provided by sensor system 115 and localization information obtained by localization module 301, a perception of the surrounding environment is determined by perception module 302. The perception information may represent what an ordinary driver would perceive surrounding a vehicle in which the driver is driving. The perception can include the lane configuration, traffic light signals, a relative position of another vehicle, a pedestrian, a building, crosswalk, or other traffic related signs (e.g., stop signs, yield signs), etc., for example, in a form of an object. The lane configuration includes information describing a lane or lanes, such as, for example, a shape of the lane (e.g., straight or curvature), a width of the lane, how many lanes in a road, one-way or two-way lane, merging or splitting lanes, exiting lane, etc.

Perception module 302 may include a computer vision system or functionalities of a computer vision system to process and analyze images captured by one or more cameras in order to identify objects and/or features in the environment of autonomous vehicle. The objects can include traffic signals, road way boundaries, other vehicles, pedestrians, and/or obstacles, etc. The computer vision system may use an object recognition algorithm, video tracking, and other computer vision techniques. In some embodiments, the computer vision system can map an environment, track objects, and estimate the speed of objects, etc. Perception module 302 can also detect objects based on other sensors data provided by other sensors such as a radar and/or LIDAR

For each of the objects, prediction module 303 predicts what the object will behave under the circumstances. The prediction is performed based on the perception data perceiving the driving environment at the point in time in view of a set of map/rout information 311 and traffic rules 312. For example, if the object is a vehicle at an opposing direction and the current driving environment includes an intersection, prediction module 303 will predict whether the vehicle will likely move straight forward or make a turn. If the perception data indicates that the intersection has no traffic light, prediction module 303 may predict that the vehicle may have to fully stop prior to enter the intersection. If the perception data indicates that the vehicle is currently at a left-turn only lane or a right-turn only lane, prediction module 303 may predict that the vehicle will more likely make a left turn or right turn respectively.

For each of the objects, decision module 304 makes a decision regarding how to handle the object. For example, for a particular object (e.g., another vehicle in a crossing route) as well as its metadata describing the object (e.g., a speed, direction, turning angle), decision module 304 decides how to encounter the object (e.g., overtake, yield, stop, pass). Decision module 304 may make such decisions according to a set of rules such as traffic rules or driving rules 312, which may be stored in persistent storage device 352.

Routing module 307 is configured to provide one or more routes or paths from a starting point to a destination point. For a given trip from a start location to a destination location, for example, received from a user, routing module 307 obtains route and map information 311 and determines all possible routes or paths from the starting location to reach the destination location. Routing module 307 may generate a reference line in a form of a topographic map for each of the routes it determines from the starting location to reach the destination location. A reference line refers to an ideal route or path without any interference from others such as other vehicles, obstacles, or traffic condition. That is, if there is no other vehicle, pedestrians, or obstacles on the road, an ADV should exactly or closely follows the reference line. The topographic maps are then provided to decision module 304 and/or planning module 305. Decision module 304 and/or planning module 305 examine all of the possible routes to select and modify one of the most optimal routes in view of other data provided by other modules such as traffic conditions from localization module 301, driving environment perceived by perception module 302, and traffic condition predicted by prediction module 303. The actual path or route for controlling the ADV may be close to or different from the reference line provided by routing module 307 dependent upon the specific driving environment at the point in time.

Based on a decision for each of the objects perceived, planning module 305 plans a path or route for the autonomous vehicle, as well as driving parameters (e.g., distance, speed, and/or turning angle), using a reference line provided by routing module 307 as a basis. That is, for a given object, decision module 304 decides what to do with the object, while planning module 305 determines how to do it. For example, for a given object, decision module 304 may decide to pass the object, while planning module 305 may determine whether to pass on the left side or right side of the object. Planning and control data is generated by planning module 305 including information describing how vehicle 300 would move in a next moving cycle (e.g., next route/path segment). For example, the planning and control data may instruct vehicle 300 to move 10 meters at a speed of 30 miles per hour (mph), then change to a right lane at the speed of 25 mph.

Based on the planning and control data, control module 306 controls and drives the autonomous vehicle, by sending proper commands or signals to vehicle control system 111, according to a route or path defined by the planning and control data. The planning and control data include sufficient information to drive the vehicle from a first point to a second point of a route or path using appropriate vehicle settings or driving parameters (e.g., throttle, braking, steering commands) at different points in time along the path or route.

As part of controlling and driving the autonomous vehicle, AD-to-MD transition may be initiated while the vehicle is operating in AD mode. In one embodiment, the AD-to-MD transition may be initiated by a human driver of the vehicle. In another embodiment, the AD-to-MD transition may be initiated by the vehicle's autonomous driving system (e.g., perception and planning system 110) in certain driving scenarios (e.g., when the vehicle is approaching operational design domain (ODD) boundary, facing an unexpected scenario, etc. while the vehicle prepares for a safe stop). In yet another embodiment, the AD-to-MD transition may be initiated by the vehicle's autonomous driving system while the vehicle fulfills fail-operational requirements that sustain system safety (i.e., proceed with fail-operational maneuvers to meet minimum risk conditions) if a failure occurs during automated driving (i.e., operating in AD mode).

With continued reference to Figure 3A, based on MPOI information (or map and route information 311), location information (e.g., a current location), and driving scenario (e.g., real-time traffic information, real-time local environment data detected or sensed by sensor system 115, responses (e.g., speeds, accelerations, decelerations, directions) of the vehicle), AD-to-MD transition enabler 308 may determine whether to enable the AD-to-MD transition.

Once AD-to-MD transition is enabled, AD-to-MD transition confirmation module 309 determines whether there is a request for AD-to-MD transition. As previously described, the AD-to-MD transition may be requested or initiated by a human driver or by the vehicle's autonomous driving system in certain driving scenarios. Upon detection of the request, module 309 may use a current motion trajectory (which may include tolerance) as a boundary to compare with a motion trajectory derived from the driver's inputs. If the two trajectories are aligned (i.e., the driver's intended motion trajectory is within the defined boundary of the current motion trajectory), then the AD-to-MD transition is confirmed. Otherwise, if the trajectories are not aligned, then the AD-to-MD transition is not confirmed, though AD-to-MD transition may still be enabled and module 309 may re-attempt the AD-to-MD transition confirmation.

Upon confirmation of the AD-to-MD transition, AD-to-MD transition monitor 310 may be activated to ensure the safety of the transition. For example, if monitor 310 determines the transition is successfully completed within a predefined timeframe, module 310 transitions the autonomous driving vehicle to MD mode. Meanwhile, the autonomous driving system (e.g., perception and planning system 110) continues to run in the background and may switch the vehicle to AD mode as needed. On the other hand, if monitor 310 determines that the transition is unsuccessful, then the autonomous driving system may operate the vehicle in AD mode and proceed with its own calculated motion trajectory.

In one embodiment, the planning phase is performed in a number of planning cycles, also referred to as driving cycles, such as, for example, in every time interval of 100 milliseconds (ms). For each of the planning cycles or driving cycles, one or more control commands will be issued based on the planning and control data. That is, for every 100 ms, planning module 305 plans a next route segment or path segment, for example, including a target position and the time required for the ADV to reach the target position. Alternatively, planning module 305 may further specify the specific speed, direction, and/or steering angle, etc. In one embodiment, planning module 305 plans a route segment or path segment for the next predetermined period of time such as 5 seconds. For each planning cycle, planning module 305 plans a target position for the current cycle (e.g., next 5 seconds) based on a target position planned in a previous cycle. Control module 306 then generates one or more control commands (e.g., throttle, brake, steering control commands) based on the planning and control data of the current cycle.

Note that decision module 304 and planning module 305 may be integrated as an integrated module. Decision module 304/planning module 305 may include a navigation system or functionalities of a navigation system to determine a driving path for the autonomous vehicle. For example, the navigation system may determine a series of speeds and directional headings to affect movement of the autonomous vehicle along a path that substantially avoids perceived obstacles while generally advancing the autonomous vehicle along a roadway-based path leading to an ultimate destination. The destination may be set according to user inputs via user interface system 113. The navigation system may update the driving path dynamically while the autonomous vehicle is in operation. The navigation system can incorporate data from a GPS system and one or more maps so as to determine the driving path for the autonomous vehicle.

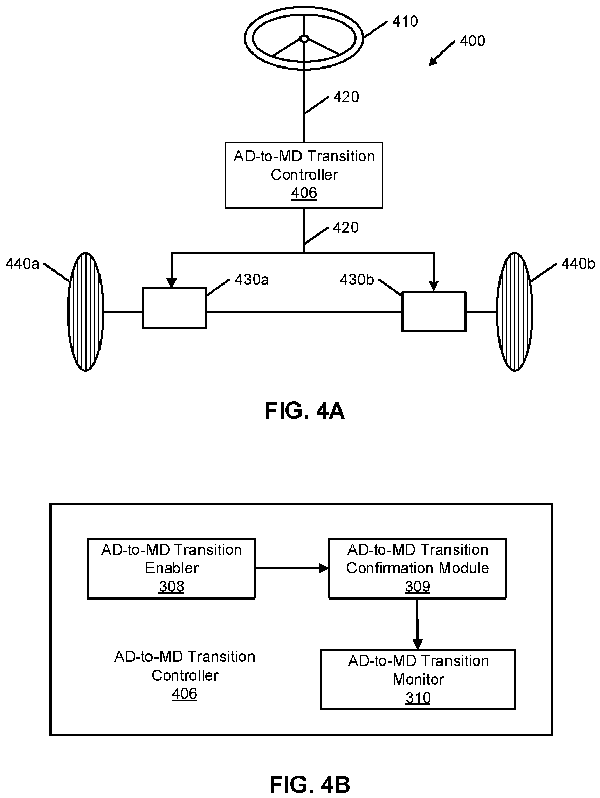

Figures 4A-4B are diagrams illustrating a drive by wire system according to one embodiment. Referring to Figure 4A, steer-by-wire (also referred to as x-by-wire) system 400 may be part of an autonomous driving vehicle (e.g., ADV 101). As shown, system 400 may include a steering wheel 410 that controls the steering of the vehicle's wheels 440a-b. For example, when a driver turns steering wheel 410, a steering emulator may communicate a steering signal or command to actuators 430a-b via communication link 420 (which may be wired or wireless). Based on the steering signal, actuators 430a-b may turn wheels 440a-b at a steering angle. In one embodiment, the steering signal may include an indication of a steering angle of steering wheel 410 or wheels 440a-b. Although not shown in Figure 4A, in one embodiment, system 400 may further include a throttle pedal and a brake pedal to control the acceleration and deceleration of the vehicle, respectively. In one embodiment, the throttle and brake pedals may control the vehicle using communication link 420 and actuators 430a-b, or alternatively, using their respective communication links and actuators.

With continued reference to Figures 4A-4B, system 400 also includes AD-to-MD transition controller 406 in between communication link 420 to control the AD-to-MD transition of the vehicle. Controller 406 can be seen as a "gatekeeper" that determines whether or not to allow a driver to control wheels 440a-b via inputs to steering wheel 410. As shown in Figure 4B, controller 406 may include AD-to-MD transition enabler 308, confirmation module 309, and monitor 310. However, in some embodiments, modules 308-310 may not be part of controller 406, and instead, each of modules 308-310 may be a respective separate module.

As previously described, AD-to-MD transition enabler 308 may determine whether to enable the AD-to-MD transition based on MPOI information (or map and route information 311), location information (e.g., a current location), driving scenario (e.g., real-time traffic information, real-time local environment data detected or sensed by sensor system 115, responses (e.g., speeds, accelerations, decelerations, directions) of the vehicle). For example, using MPOI information and/or location information, enabler 308 may define specific road sections where AD-to-MD transition may be unsafe (and therefore is not allowed), such as a lane merge, an intersection, a significant road gradient (both uphill and downhill), an entry/exit tunnel, a highway ramp, areas with frequent traffic accidents (based on accident statistics), etc. In one embodiment, certain vehicle responses (or maneuvers) and/or traffic situations may be excluded from AD-to-MD transition as they may be determined to be unsafe or improper, such as, for example, an overtake maneuver, a lane change, high vehicle speed around a medium or high traffic area, etc. Accordingly, unsafe road sections located on or along an input or planned route may be predefined for disablement of AD-to-MD transition. In addition, unsafe vehicle responses and/or traffic situations may also be dynamically determined and stored for disablement of AD-to-MD transition as the vehicle proceeds along the input route. If none of the unsafe conditions (i.e., unsafe road sections, vehicle responses, traffic situations, etc.) exists, then enabler 308 may allow or enable AD-to-MD transition. Otherwise, enabler 308 may disable the AD-to-MD transition. In one embodiment, the driver may be notified of the enablement or disablement of the AD-to-MD transition via a display device (e.g., touch screen display device) of user interface system 113.

Once the AD-to-MD transition is enabled, module 309 may check whether there is a request for AD-to-MD transition. In one embodiment, the AD-to-MD transition request may be initiated when a driver operates or steers steering wheel 410. Upon detecting the request, to determine whether the driver's operation is safe, module 309 may compare a current motion trajectory (which is used as a boundary or limit) with a motion trajectory derived from the driver's inputs. If the trajectories are aligned (i.e., driver's intended motion trajectory is within the boundary), then module 309 confirms the AD-to-MD transition. Otherwise, the AD-to-MD transition is not confirmed. However, if the AD-to-MD transition remains enabled, the driver may re-attempt to operate or steer the steering wheel 410. In one embodiment, the driver may be notified of the AD-to-MD transition confirmation via a display device (e.g., touch screen display device) of user interface system 113.

Upon confirmation of the AD-to-MD transition, monitor 310 is activated to ensure the safety of the transition. In doing so, monitor 310 may trigger a transition timer. If the transition is completed within a predetermined timeframe or time period, monitor 310 may transition the vehicle to MD mode, where the driver can manually operate or control the vehicle. In one embodiment, the driver may be notified that the vehicle is in MD mode via a display device (e.g., touch screen display device) of user interface system 113. Meanwhile, the autonomous driving system (e.g., perception and planning system 110) continues to operate in the background and may switch the vehicle to AD mode as needed. On the other hand, if monitor 310 determines that the transition is unsuccessful, then the autonomous driving system may operate the vehicle in AD mode and proceed with its own calculated motion trajectory. In this case, the driver may be notified that the vehicle is in AD mode via the display device (e.g., touch screen display device) of user interface system 113.

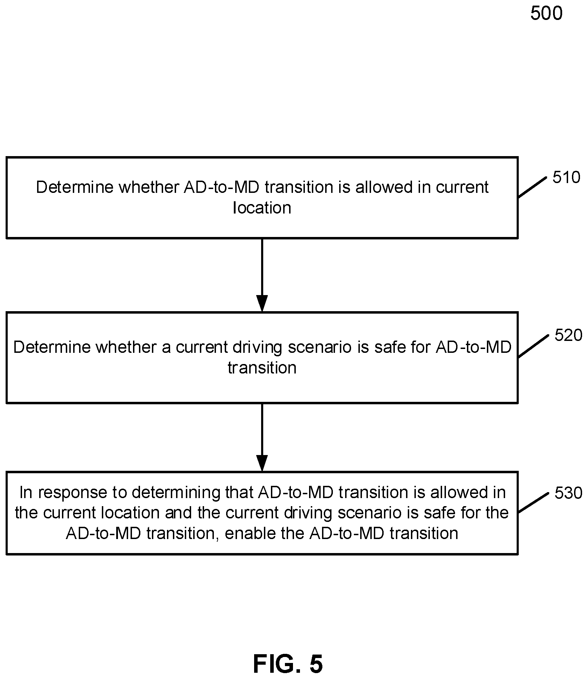

Figure 5 is a flow diagram illustrating an example method for enabling AD-to-MD transition according to one embodiment. Method 500 may be performed by hardware, software, or a combination of both. For example, method 500 may be performed by AD-to-MD transition enabler 308 of Figure 3A.

Referring to Figure 5, at block 510, it is determined whether AD-to-MD transition in a current location is allowed. For example, using MPOI information, specific road sections along a planned route may be determined to be unsafe, such as a lane merge, an intersection, a significant road gradient (both uphill and downhill), an entry/exit tunnel, a highway ramp, areas with frequent traffic accidents (based on accident statistics), etc. Therefore, based on location information of the vehicle (e.g., ADV 101), if the current location of the vehicle is on an unsafe road section of the planned route, then AD-to-MD transition is not allowed. Otherwise, AD-to-MD transition is allowed in the current location. At block 520, it is determined whether a current driving scenario is safe for AD-to-MD transition. In one embodiment, real-time traffic information and real-time local environment data detected or sensed by sensor system 115 may be analyzed to determine whether the current driving scenario is safe for AD-to-MD transition. For example, if real-time traffic information indicates medium or high traffic in the area and/or real-time environment data indicates a large number of obstacles exists in the area, then the current driving scenario may be determined to be unsafe. In addition, vehicle responses (e.g., speeds, accelerations, decelerations, directions) may also be analyzed to determine whether the current driving scenario is safe. For example, an overtake maneuver, a lane change, high vehicle speed around high traffic area, etc. may indicate the current driving scenario is unsafe. Otherwise, the current driving scenario would be determined to be safe. At block 530, in response to determining that the AD-to-MD transition is allow in the current location and the current driving scenario is safe for the AD-to-MD transition, the AD-to-MD transition is enabled. In one embodiment, the enablement of the AD-to-MD transition may be communicated to a driver/user of the vehicle via a user interface system (e.g., system 113 of Figure 1).

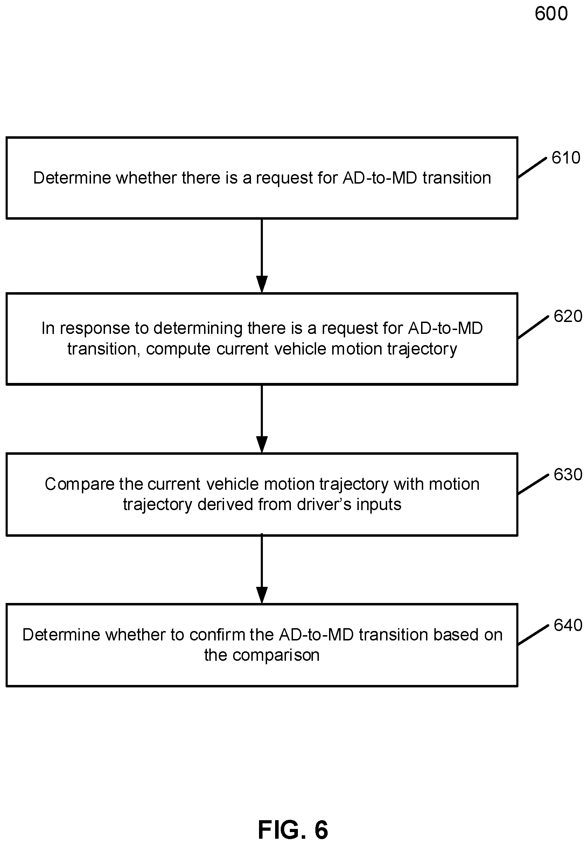

Figure 6 is a flow diagram illustrating an example method for confirming AD-to-MD transition according to one embodiment. Method 600 may be performed by hardware, software, or a combination of both. For example, method 600 may be performed by AD-to-MD transition confirmation module 309 of Figure 3A.

Referring to Figure 6, at block 610, it is determined whether there is a request for AD-to-MD transition. In one embodiment, the AD-to-MD transition may be requested by a human driver of the vehicle. In another embodiment, the AD-to-MD transition may be initiated by the vehicle's autonomous driving system (e.g., perception and planning system 110) in certain driving scenarios (e.g., when the vehicle is approaching ODD boundary, facing an unexpected scenario, etc.). In yet another embodiment, the AD-to-MD transition may be initiated by the vehicle's autonomous driving system while the vehicle fulfills fail-operational requirements that sustain system safety (i.e., proceed with fail-operational maneuvers to meet minimum risk conditions) if a failure occurs during automated driving (i.e., operating in AD mode). At block 620, in response to determining there is a request for AD-to-MD transition, a current vehicle motion trajectory is computed. In one embodiment, the current vehicle motion trajectory is computed based on sensor data detected by sensor system 115. At block 630, the computed current vehicle motion trajectory is compared with a motion trajectory derived from a driver's inputs (e.g., steering angle, throttle position, and brake position sensed when the driver operates the vehicle). At block 640, it is determined whether to confirm the AD-to-MD transition based on the comparison. For example, if the trajectories are aligned (i.e., the driver's intended motion trajectory is within the boundary), then the AD-to-MD transition is confirmed. Otherwise, the AD-to-MD transition is not confirmed. In one embodiment, the confirmation of the AD-to-MD transition may be communicated to the driver/user of the vehicle via a user interface system (e.g., system 113 of Figure 1).

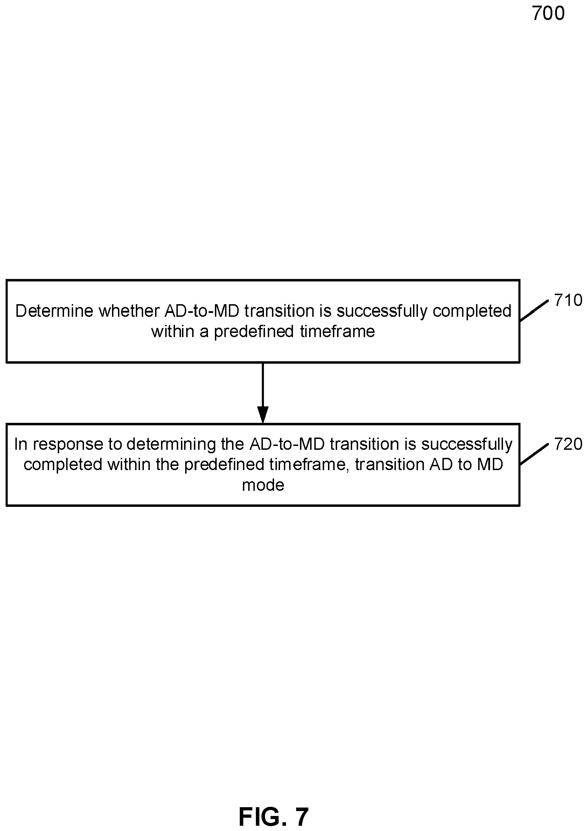

Figure 7 is a flow diagram illustrating an example method for monitoring AD-to-MD transition according to one embodiment. Method 700 may be performed by hardware, software, or a combination of both. For example, method 700 may be performed by AD-to-MD transition monitor 310 of Figure 3A.

Referring to Figure 7, at block 710, it is determined whether AD-to-MD transition is successfully completed within a predefined timeframe. For example, once the AD-to-MD transition is confirmed (as previously described with respect to Figure 6), a transition timer may be started to measure the predefined timeframe. At block 720, in response to determining the AD-to-MD transition is successfully completed within the predefined timeframe, the vehicle (e.g., ADV 101) is transition from AD to MD mode, where the driver can manually operate or control the vehicle. In one embodiment, the operating mode of the vehicle (e.g., AD or MD mode) may be communicated to the driver via user interface system 113.

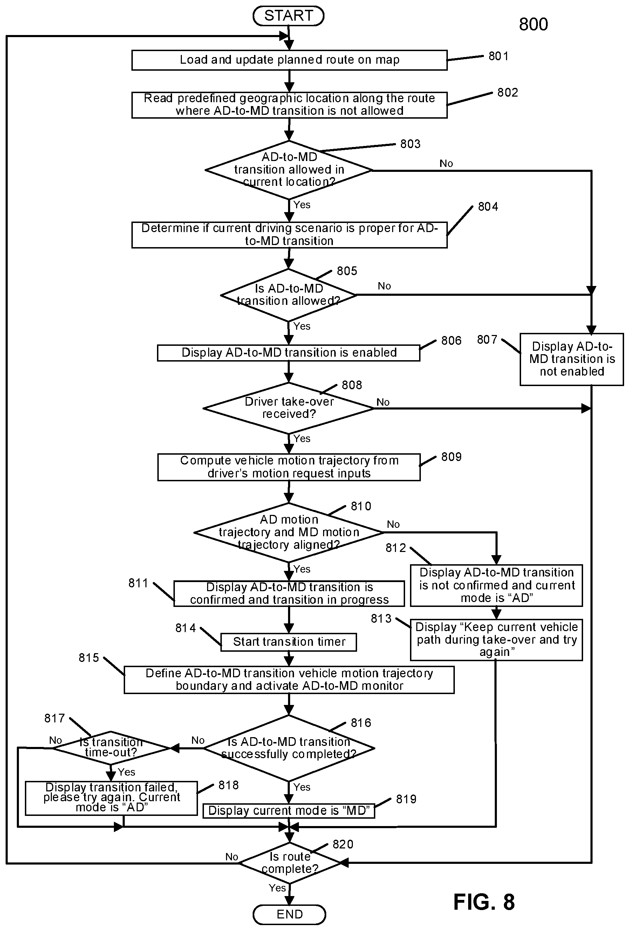

Figure 8 is a flow diagram illustrating an example method for a driver initiated transition from AD mode to MD mode according to one embodiment. Method 800 may be performed by hardware, software, or a combination of both. For example, method 800 may be performed by a combination of modules 308-310 of Figure 3A.

Referring to Figure 8, at block 801, a planned route is loaded and updated on a map, for example, as provided by map and route information 311 of Figure 3A. At block 802, predefined geographic location(s) along the planned route where AD-to-MD transition is not allowed is read. At block 803, it is determined whether AD-to-MD transition in a current location is allowed. If AD-to-MD transition is allowed in the current location, then method 800 proceeds to block 804. Otherwise, method 800 proceeds to block 807 where a message indicating AD-to-MD transition not enabled (or disabled) is displayed, for example, via user interface system 113 of Figure 1. At block 804, it is determined whether a current driving scenario for AD-to-MD transition is proper or safe, as previously described, and for brevity sake, will not be described again. At block 805, it is determined whether AD-to-MD transition is allowed. If so, method 800 proceeds to block 806 where a message indicating AD-to-MD transition is enabled is displayed, for example, via user interface system 113 of Figure 1. Otherwise, method 800 proceeds to block 807. At block 808, whether a request for a driver to take-over is received. If so, method 800 proceeds to block 809. Otherwise, method 800 proceeds to block 820. At block 809, a vehicle motion trajectory from the driver's inputs (e.g., steering angle, throttle position, and brake position sensed when the driver operates the vehicle) is computed. At block 810, it is determined whether AD motion trajectory and MD motion trajectory (i.e., the computed trajectory from the driver's inputs) are aligned. If so, method 800 proceeds to block 811, where AD-to-MD transition confirmation and transition in progress are displayed, for example, via user interface system 113 of Figure 1. Otherwise, method 800 proceeds to block 812 where a message indicating AD-to-MD transition is not confirmed and current mode is "AD" is displayed, for example, via system 113 of Figure 1. At block 813, a message "Keep current vehicle path during take-over and try again" is displayed, for example, via user interface system 113 of Figure 1. At block 814, a transition timer is started. At block 815, an AD-to-MD transition vehicle motion trajectory boundary is defined, and an AD-to-MD monitor (e.g., monitor 310 of Figure 3A) is activated. At block 816, it is determined whether the AD-to-MD transition is successfully completed. If so, method 800 proceeds to block 819 where a message indicating the current mode is "MD" is displayed, for example, via user interface system 113 of Figure 1. Otherwise, method 800 proceeds to block 817 where it is determined whether the transition timer has timed-out. If so, method 800 proceeds to block 818 where a message indicating the transition has failed, please try again, and current mode is "AD" is displayed, for example, via system 113 of Figure 1. Otherwise, method 800 proceeds to block 820 where it is determined whether the planned route is complete. If so, method 800 ends. Otherwise, method 800 returns to block 801.

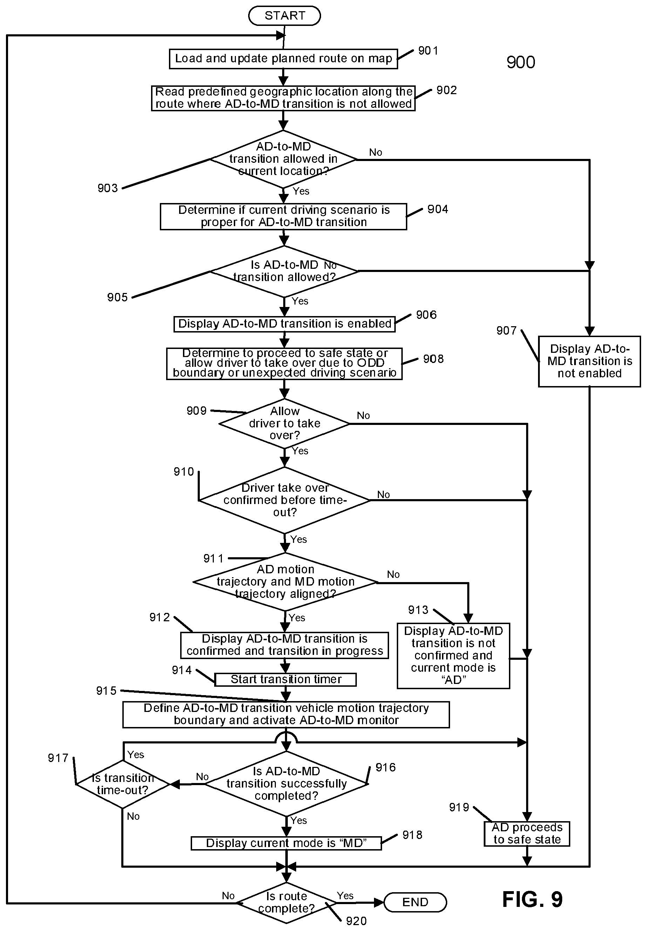

Figure 9 is a flow diagram illustrating an example method for a system initiated transition from AD mode to MD mode according to one embodiment. Method 900 may be performed by hardware, software, or a combination of both. For example, method 900 may be performed by a combination of modules 308-310 of Figure 3A.

Referring to Figure 9, at block 901, a planned route is loaded and updated on a map, for example, as provided by map and route information 311 of Figure 3A. At block 902, predefined geographic location(s) along the planned route where AD-to-MD transition is not allowed is read. At block 903, it is determined whether AD-to-MD transition in a current location is allowed. If AD-to-MD transition is allowed in the current location, then method 900 proceeds to block 904. Otherwise, method 900 proceeds to block 907 where a message indicating AD-to-MD transition not enabled (or disabled) is displayed, for example, via user interface system 113 of Figure 1. At block 904, it is determined whether a current driving scenario for AD-to-MD transition is proper or safe, as previously described, and for brevity sake, will not be described again. At block 905, it is determined whether AD-to-MD transition is allowed. If so, method 900 proceeds to block 906 where a message indicating AD-to-MD transition is enabled is displayed, for example, via user interface system 113 of Figure 1. Otherwise, method 900 proceeds to block 907. At block 908, it is determined to proceed to a safe state or allow a driver to take over, for example, due to ODD boundary or an unexpected driving scenario. At block 909, it is determined whether to allow a driver to take over. If so, method 900 proceeds to block 910. Otherwise, method 900 proceeds to block 919 where AD is commanded to proceed to a safe state. At block 910, it is determined whether the driver's takeover is confirmed before a timeout occurs. If so, method 900 proceeds to block 911. Otherwise, method 900 proceeds to block 919. At block 911, it is determined whether AD motion trajectory is aligned with MD motion trajectory (i.e., the computed trajectory from the driver's inputs). If so, method 900 proceeds to block 912 where AD-to-MD transition confirmation and transition in progress are displayed, for example, via system 113 of Figure 1. Otherwise, method 900 proceeds to block 913 where a message indicating AD-to-MD transition is not confirmed and current mode is "AD" is displayed, for example, via system 113 of Figure 1. At block 914, a transition timer is started. At block 915, AD-to-MD transition vehicle motion trajectory is defined, and an AD-to-MD transition monitor (e.g., monitor 310 of Figure 3A) is activated. At block 916, it is determined whether AD-to-MD transition is successfully completed. If so, method 900 proceeds to block 918 where a message indicating the current mode is "MD" is displayed, for example, via system 113 of Figure 1. Otherwise, method 900 proceeds to block 917. At block 917, it is determined whether the transition timer has timed out. If so, method 900 proceeds to block 919. Otherwise, method 900 proceeds to block 920. At block 920, it is determined whether the planned route is complete. If so, method 900 ends. Otherwise, method 900 returns to block 901.

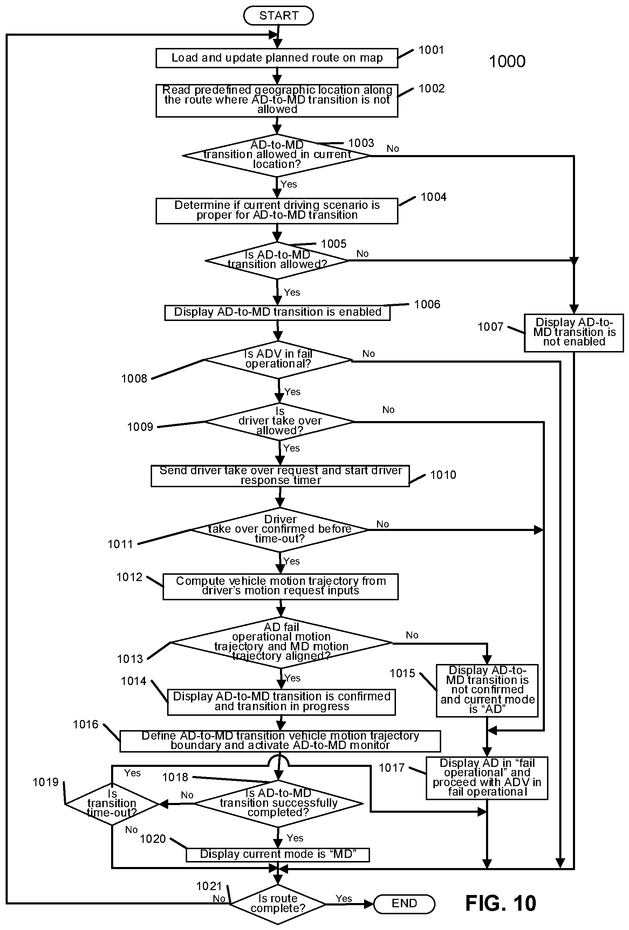

Figure 10 is a flow diagram illustrating another example method for a system initiated transition from AD mode to MD mode according to one embodiment. Method 1000 may be performed by hardware, software, or a combination of both. For example, method 1000 may be performed by a combination of modules 308-310 of Figure 3A.

Referring to Figure 10, at block 1001, a planned route is loaded and updated on a map, for example, as provided by map and route information 311 of Figure 3A. At block 1002, predefined geographic location(s) along the planned route where AD-to-MD transition is not allowed is read. At block 1003, it is determined whether AD-to-MD transition in a current location is allowed. If AD-to-MD transition is allowed in the current location, then method 1000 proceeds to block 1004. Otherwise, method 1000 proceeds to block 1007 where a message indicating AD-to-MD transition not enabled (or disabled) is displayed, for example, via user interface system 113 of Figure 1. At block 1004, it is determined whether a current driving scenario for AD-to-MD transition is proper or safe, as previously described, and for brevity sake, will not be described again. At block 1005, it is determined whether AD-to-MD transition is allowed. If so, method 1000 proceeds to block 1006 where a message indicating AD-to-MD transition is enabled is displayed, for example, via user interface system 113 of Figure 1. Otherwise, method 1000 proceeds to block 1007. At block 1008, it is determined whether the vehicle (e.g., ADV 101 of Figure 1) is in fail operational mode. If so, method 1000 proceeds to block 1009. Otherwise, method 1000 proceeds to block 1021. At block 1009, it is determined whether a driver is allowed to take over. If so, method 1000 proceeds to block 1010. Otherwise, method 1000 proceeds to block 1017 where a message indicating AD is in "fail operational" and proceed with the vehicle operating in fail operational mode is displayed, for example, via system 113 of Figure 1. At block 1010, a request for the driver to take over is sent and a driver response timer is started. At block 1011, it is determined whether the drivers takeover request is confirmed before the driver response timer expires (i.e., timed out). If so, method 1000 proceeds to block 1012. Otherwise, method 1000 proceeds to block 1017. At block 1012, a vehicle motion trajectory from the driver's inputs (e.g., steering angle, throttle position, and brake position sensed when the driver operates the vehicle) is computed. At block 1013, it is determined whether an AD fail operational motion trajectory is aligned with an MD motion trajectory (i.e., the computed trajectory from the driver's inputs). If so, method 1000 proceeds to block 1014 where a message indicating AD-to-MD transition is confirmed and transition is in progress is displayed, for example, via system 113 of Figure 1. Otherwise, method 1000 proceeds to block 1015 where a message indicating AD-to-MD transition is not confirmed and current mode is "AD" is displayed. At block 1016, an AD-to-MD transition vehicle motion trajectory boundary is defined and an AD-to-MD monitor (e.g., monitor 310 of Figure 3A) is activated. At block 1018, it is determined whether AD-to-MD transition is successfully completed. If so, method 1000 proceeds to block 1020 where current mode is "MD" is displayed, for example, via system 113 of Figure 1. Otherwise, method 1000 proceeds to block 1019. At block 1019, it is determined whether the AD-to-MD transition has timed out. If so, method 1000 proceeds to block 1021. Otherwise, method 1000 also proceeds to block 1021 where it is determined whether the planned route is complete. If so, method 1000 ends. Otherwise, method 1000 returns to block 1001.

Note that some or all of the components as shown and described above may be implemented in software, hardware, or a combination thereof. For example, such components can be implemented as software installed and stored in a persistent storage device, which can be loaded and executed in a memory by a processor (not shown) to carry out the processes or operations described throughout this application. Alternatively, such components can be implemented as executable code programmed or embedded into dedicated hardware such as an integrated circuit (e.g., an application specific IC or ASIC), a digital signal processor (DSP), or a field programmable gate array (FPGA), which can be accessed via a corresponding driver and/or operating system from an application. Furthermore, such components can be implemented as specific hardware logic in a processor or processor core as part of an instruction set accessible by a software component via one or more specific instructions.

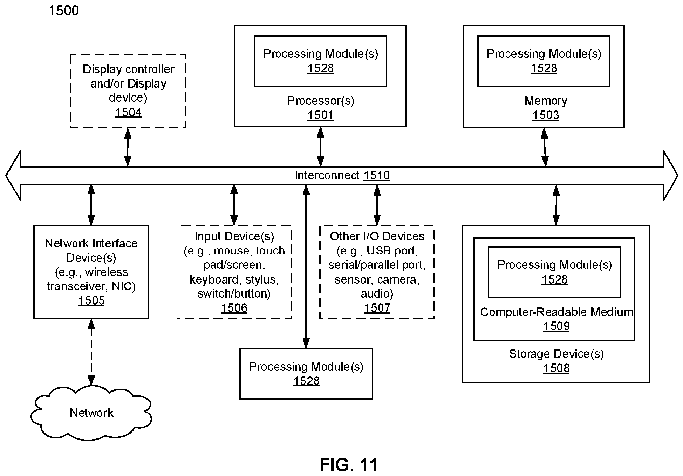

Figure 11 is a block diagram illustrating an example of a data processing system which may be used with one embodiment of the disclosure. For example, system 1500 may represent any of data processing systems described above performing any of the processes or methods described above, such as, for example, perception and planning system 110 or any of servers 103-104 of Figure 1, and AD-to-MD transition monitor 310 of Figure 3A. System 1500 can include many different components. These components can be implemented as integrated circuits (ICs), portions thereof, discrete electronic devices, or other modules adapted to a circuit board such as a motherboard or add-in card of the computer system, or as components otherwise incorporated within a chassis of the computer system.

Note also that system 1500 is intended to show a high level view of many components of the computer system. However, it is to be understood that additional components may be present in certain implementations and furthermore, different arrangement of the components shown may occur in other implementations. System 1500 may represent a desktop, a laptop, a tablet, a server, a mobile phone, a media player, a personal digital assistant (PDA), a Smartwatch, a personal communicator, a gaming device, a network router or hub, a wireless access point (AP) or repeater, a set-top box, or a combination thereof. Further, while only a single machine or system is illustrated, the term "machine" or "system" shall also be taken to include any collection of machines or systems that individually or jointly execute a set (or multiple sets) of instructions to perform any one or more of the methodologies discussed herein.

In one embodiment, system 1500 includes processor 1501, memory 1503, and devices 1505-1508 connected via a bus or an interconnect 1510. Processor 1501 may represent a single processor or multiple processors with a single processor core or multiple processor cores included therein. Processor 1501 may represent one or more general-purpose processors such as a microprocessor, a central processing unit (CPU), or the like. More particularly, processor 1501 may be a complex instruction set computing (CISC) microprocessor, reduced instruction set computing (RISC) microprocessor, very long instruction word (VLIW) microprocessor, or processor implementing other instruction sets, or processors implementing a combination of instruction sets. Processor 1501 may also be one or more special-purpose processors such as an application specific integrated circuit (ASIC), a cellular or baseband processor, a field programmable gate array (FPGA), a digital signal processor (DSP), a network processor, a graphics processor, a communications processor, a cryptographic processor, a co-processor, an embedded processor, or any other type of logic capable of processing instructions.

Processor 1501, which may be a low power multi-core processor socket such as an ultra-low voltage processor, may act as a main processing unit and central hub for communication with the various components of the system. Such processor can be implemented as a system on chip (SoC). Processor 1501 is configured to execute instructions for performing the operations and steps discussed herein. System 1500 may further include a graphics interface that communicates with optional graphics subsystem 1504, which may include a display controller, a graphics processor, and/or a display device.

Processor 1501 may communicate with memory 1503, which in one embodiment can be implemented via multiple memory devices to provide for a given amount of system memory. Memory 1503 may include one or more volatile storage (or memory) devices such as random access memory (RAM), dynamic RAM (DRAM), synchronous DRAM (SDRAM), static RAM (SRAM), or other types of storage devices. Memory 1503 may store information including sequences of instructions that are executed by processor 1501, or any other device. For example, executable code and/or data of a variety of operating systems, device drivers, firmware (e.g., input output basic system or BIOS), and/or applications can be loaded in memory 1503 and executed by processor 1501. An operating system can be any kind of operating systems, such as, for example, Robot Operating System (ROS), Windows® operating system from Microsoft®, Mac OS®/iOS® from Apple, Android® from Google®, LINUX, UNIX, or other real-time or embedded operating systems.

System 1500 may further include IO devices such as devices 1505-1508, including network interface device(s) 1505, optional input device(s) 1506, and other optional IO device(s) 1507. Network interface device 1505 may include a wireless transceiver and/or a network interface card (NIC). The wireless transceiver may be a WiFi transceiver, an infrared transceiver, a Bluetooth transceiver, a WiMax transceiver, a wireless cellular telephony transceiver, a satellite transceiver (e.g., a global positioning system (GPS) transceiver), or other radio frequency (RF) transceivers, or a combination thereof. The NIC may be an Ethernet card.

Input device(s) 1506 may include a mouse, a touch pad, a touch sensitive screen (which may be integrated with display device 1504), a pointer device such as a stylus, and/or a keyboard (e.g., physical keyboard or a virtual keyboard displayed as part of a touch sensitive screen). For example, input device 1506 may include a touch screen controller coupled to a touch screen. The touch screen and touch screen controller can, for example, detect contact and movement or break thereof using any of a plurality of touch sensitivity technologies, including but not limited to capacitive, resistive, infrared, and surface acoustic wave technologies, as well as other proximity sensor arrays or other elements for determining one or more points of contact with the touch screen.

IO devices 1507 may include an audio device. An audio device may include a speaker and/or a microphone to facilitate voice-enabled functions, such as voice recognition, voice replication, digital recording, and/or telephony functions. Other IO devices 1507 may further include universal serial bus (USB) port(s), parallel port(s), serial port(s), a printer, a network interface, a bus bridge (e.g., a PCI-PCI bridge), sensor(s) (e.g., a motion sensor such as an accelerometer, gyroscope, a magnetometer, a light sensor, compass, a proximity sensor, etc.), or a combination thereof. Devices 1507 may further include an imaging processing subsystem (e.g., a camera), which may include an optical sensor, such as a charged coupled device (CCD) or a complementary metal-oxide semiconductor (CMOS) optical sensor, utilized to facilitate camera functions, such as recording photographs and video clips. Certain sensors may be coupled to interconnect 1510 via a sensor hub (not shown), while other devices such as a keyboard or thermal sensor may be controlled by an embedded controller (not shown), dependent upon the specific configuration or design of system 1500.

To provide for persistent storage of information such as data, applications, one or more operating systems and so forth, a mass storage (not shown) may also couple to processor 1501. In various embodiments, to enable a thinner and lighter system design as well as to improve system responsiveness, this mass storage may be implemented via a solid state device (SSD). However, in other embodiments, the mass storage may primarily be implemented using a hard disk drive (HDD) with a smaller amount of SSD storage to act as a SSD cache to enable non-volatile storage of context state and other such information during power down events so that a fast power up can occur on re-initiation of system activities. Also a flash device may be coupled to processor 1501, e.g., via a serial peripheral interface (SPI). This flash device may provide for non-volatile storage of system software, including BIOS as well as other firmware of the system.

Storage device 1508 may include computer-accessible storage medium 1509 (also known as a machine-readable storage medium or a computer-readable medium) on which is stored one or more sets of instructions or software (e.g., module, unit, and/or logic 1528) embodying any one or more of the methodologies or functions described herein. Processing module/unit/logic 1528 may represent any of the components described above, such as, for example, planning module 305, control module 306, and AD-to-MD transition monitor 310. Processing module/unit/logic 1528 may also reside, completely or at least partially, within memory 1503 and/or within processor 1501 during execution thereof by data processing system 1500, memory 1503 and processor 1501 also constituting machine-accessible storage media. Processing module/unit/logic 1528 may further be transmitted or received over a network via network interface device 1505.

Computer-readable storage medium 1509 may also be used to store some software functionalities described above persistently. While computer-readable storage medium 1509 is shown in an exemplary embodiment to be a single medium, the term "computer-readable storage medium" should be taken to include a single medium or multiple media (e.g., a centralized or distributed database, and/or associated caches and servers) that store the one or more sets of instructions. The terms "computer-readable storage medium" shall also be taken to include any medium that is capable of storing or encoding a set of instructions for execution by the machine and that cause the machine to perform any one or more of the methodologies of the present disclosure. The term "computer-readable storage medium" shall accordingly be taken to include, but not be limited to, solid-state memories, and optical and magnetic media, or any other non-transitory machine-readable medium.

Processing module/unit/logic 1528, components and other features described herein can be implemented as discrete hardware components or integrated in the functionality of hardware components such as ASICS, FPGAs, DSPs or similar devices. In addition, processing module/unit/logic 1528 can be implemented as firmware or functional circuitry within hardware devices. Further, processing module/unit/logic 1528 can be implemented in any combination hardware devices and software components.

Note that while system 1500 is illustrated with various components of a data processing system, it is not intended to represent any particular architecture or manner of interconnecting the components; as such details are not germane to embodiments of the present disclosure. It will also be appreciated that network computers, handheld computers, mobile phones, servers, and/or other data processing systems which have fewer components or perhaps more components may also be used with embodiments of the disclosure.

Some portions of the preceding detailed descriptions have been presented in terms of algorithms and symbolic representations of operations on data bits within a computer memory. These algorithmic descriptions and representations are the ways used by those skilled in the data processing arts to most effectively convey the substance of their work to others skilled in the art. An algorithm is here, and generally, conceived to be a self-consistent sequence of operations leading to a desired result. The operations are those requiring physical manipulations of physical quantities.

It should be borne in mind, however, that all of these and similar terms are to be associated with the appropriate physical quantities and are merely convenient labels applied to these quantities. Unless specifically stated otherwise as apparent from the above discussion, it is appreciated that throughout the description, discussions utilizing terms such as those set forth in the claims below, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

Embodiments of the disclosure also relate to an apparatus for performing the operations herein. Such a computer program is stored in a non-transitory computer readable medium. A machine-readable medium includes any mechanism for storing information in a form readable by a machine (e.g., a computer). For example, a machine-readable (e.g., computer-readable) medium includes a machine (e.g., a computer) readable storage medium (e.g., read only memory ("ROM"), random access memory ("RAM"), magnetic disk storage media, optical storage media, flash memory devices).

The processes or methods depicted in the preceding figures may be performed by processing logic that comprises hardware (e.g. circuitry, dedicated logic, etc.), software (e.g., embodied on a non-transitory computer readable medium), or a combination of both. Although the processes or methods are described above in terms of some sequential operations, it should be appreciated that some of the operations described may be performed in a different order. Moreover, some operations may be performed in parallel rather than sequentially.

Embodiments of the present disclosure are not described with reference to any particular programming language. It will be appreciated that a variety of programming languages may be used to implement the teachings of embodiments of the disclosure as described herein.

In the foregoing specification, embodiments of the disclosure have been described with reference to specific exemplary embodiments thereof. It will be evident that various modifications may be made thereto without departing from the broader spirit and scope of the disclosure as set forth in the following claims. The specification and drawings are, accordingly, to be regarded in an illustrative sense rather than a restrictive sense.

## Claims

1. A computer-implemented method of transitioning from autonomous driving (AD) to manual driving (MD) mode for an autonomous driving vehicle (ADV), the method comprising:
determining whether AD-to-MD transition is allowed in a current location of the ADV;
determining whether a current driving scenario is safe for the AD-to-MD transition;
in response to determining that the AD-to-MD transition is allowed in the current location and the current driving scenario is safe for the AD-to-MD transition, enabling the AD-to-MD transition;
determining whether there is a request for the AD-to-MD transition;
in response to determining there is the request, computing a current vehicle motion trajectory of the ADV;
comparing the current vehicle motion trajectory with a motion trajectory derived from inputs of a driver of the ADV; and
determining whether to confirm the AD-to-MD transition based on the comparison.

2. The method of claim 1, further comprising:
determining whether the AD-to-MD transition is successfully completed within a predefined timeframe; and
in response to determining that the AD-to-MD transition is successfully completed within the predefined timeframe, transitioning the ADV from AD to MD mode.

3. The method of claim 1, further comprising: prior to determining whether the AD-to-MD transition is allowed in the current location of the ADV,
identifying road sections along a planned route determined to be unsafe based on map and point of interest (MPOI) information; and
determining whether the current location of the ADV is on an unsafe road section.

4. The method of claim 3, wherein determining whether the AD-to-MD transition is allowed in the current location of the ADV comprises determining that the AD-to-MD transition is not allowed in response to determining that the current location of the ADV is on the unsafe road section.

5. The method of claim 1, wherein whether the current driving scenario is safe for the AD-to-MD transition is determined based on real-time traffic information and real-time local environment data detected by the ADV.

6. The method of claim 2, further comprising:
prior to determining whether the AD-to-MD transition is successfully completed within the predefined timeframe, starting a transition timer; and
in response to determining that the AD-to-MD transition is not successfully completed within the predefined timeframe, determining whether the transition timer has expired.

7. The method of claim 2, further comprising: allowing a driver of the ADV to control the ADV in response to detecting the ADV is approaching an operational design domain (ODD) boundary or facing an unexpected scenario.

8. The method of claim 7, further comprising:
determining whether the control of the ADV by the driver is confirmed before a timeout occurs; and
in response to determining that the control of the ADV is not confirmed before the timeout occurs, commanding the ADV to proceed to a safe state.

9. The method of claim 7, further comprising:
prior to determining whether the AD-to-MD transition is successfully completed within the predefined timeframe, starting a transition timer;
in response to determining that the AD-to-MD transition is not successfully completed within the predefined timeframe, determining whether the transition timer has expired; and
in response to determining that the transition timer has expired, commanding the ADV to proceed to a safe state.

10. The method of claim 2, further comprising:
determining whether the ADV is operating in fail operational mode;
in response to determining that the ADV is operating in fail operational mode, determining whether a driver of the ADV is allowed to control the ADV; and
in response to determining that the driver is allowed to control the ADV, sending a driver take-over request.

11. The method of claim 10, further comprising:
starting a driver response timer; and
determining whether the driver take-over request is confirmed before the driver timer expires.

12. The method of claim 1, further comprising:
subsequent to enabling the AD-to-MD transition, displaying a message indicating the AD-to-MD transition is enabled; and
in response to determining that the AD-to-MD transition is not allowed in the current location or the current driving scenario is not safe for the AD-to-MD transition, displaying a message indicating the AD-to-MD transition is not enabled.

13. The method of claim 1, wherein comparing the current vehicle motion trajectory with the motion trajectory derived from inputs of a driver of the ADV comprises determining whether the current vehicle motion trajectory is aligned with the motion trajectory derived from the inputs of the driver.

14. The method of claim 13, further comprising:
in response to determining that the vehicle motion trajectory is aligned with the motion trajectory derived from the inputs of the driver, displaying a message indicating the AD-to-MD transition is confirmed and the AD-to-MD transition is in progress;
otherwise, displaying a message indicating the AD-to-MD transition is not confirmed and current mode is AD.

15. A non-transitory machine-readable medium having instructions stored therein, which when executed by a processor, cause the processor to perform the computer-implemented method of transitioning from autonomous driving (AD) to manual driving (MD) mode for an autonomous driving vehicle according to any of claims 1-14.

16. A data processing system, comprising:
a processor; and
a memory coupled to the processor to store instructions, which when executed by the processor, cause the processor to perform the computer-implemented method of transitioning from autonomous driving (AD) to manual driving (MD) mode for an autonomous driving vehicle according to any of claims 1-14.
